# EUROPÄISCHE PATENTSCHRIFT

(11) **EP 2 346 920 B1**
(45) Veröffentlichungstag und Bekanntmachung des Hinweises auf die Patenterteilung: **26.11.2014**
(21) Anmeldenummer: 09744333.7
(22) Anmeldetag: 24.10.2009
(51) Int. Cl.: C08G 18/42, C08G 63/672, C08J 9/00

(54) **METALLVERBUNDELEMENTE UND VERWENDUNG VON PUR- ODER PIR-SCHAUMSTOFFEN ERHÄLTLICH AUS POLYESTERPOLYOLEN, DIE DURCH VERFAHREN ZUR HERSTELLUNG VON POLYESTERPOLYOLEN MIT GERINGEN MENGEN AN DIOXANABFALL ERHÄLTLICH SIND, ZUR HERSTELLUNG VON METALLVERBUNDELEMENTEN**
METAL COMPOSITE MATERIALS AND USE OF A PUR OR PIR FOAM OBTAINABLE FROM POLYESTERPOLYOLS WHICH ARE OBTAINABLE BY A METHOD FOR PRODUCING POLYESTER POLYOLS HAVING LOW VOLUME OF DIOXANE WASTE FOR MANUFACTURING METAL COMPOSITE MATERIALS
MATÉRIAUX COMPOSITES MÉTALLIQUES ET UTILISATION D'UNE MOUSSE DE PU OU PIR OBTENUE PAR UN PROCÉDÉ POUR PRODUIRE DES POLYESTER-POLYOLS EN LIMITANT LES REJETS DE DIOXANE POUR LA PRODUCTION DE MATÉRIAUX COMPOSITES MÉTALLIQUES

(30) Priorität: 06.11.2008 DE 102008056147
(43) Veröffentlichungstag der Anmeldung: 27.07.2011
(73) Patentinhaber: Bayer Intellectual Property GmbH, 40789 Monheim (DE)
(72) Erfinder: NEFZGER, Hartmut, 50259 Pulheim (DE); BAUER, Erika, 41363 Jüchen (DE); VAN DE BRAAK, Johannes, 53773 Hennef (DE); SCHLOSSMACHER, Juergen, 50126 Bergheim (DE)
(74) Vertreter: BIP Patents
(86) Internationale Anmeldenummer: PCT/EP2009/007626
(87) Internationale Veröffentlichungsnummer: WO 2010/051917

(56) Entgegenhaltungen:
- EP-A2- 0 608 754
- WO-A1-2004/050735
- DATABASE WPI Week 200405 Thomson Scientific, London, GB; AN 2004-046304 XP002603718 & JP 2003 128767 A (KAO CORP) 8. Mai 2003 (2003-05-08)

## Beschreibung

Die vorliegende Erfindung betrifft die Verwendung von Polyurethan- (PUR-) oder Polvisocvanurat- (PIR-)-Schaumstoffen erhältlich aus Polyesterpolyolen aufgebaut aus wenigstens einem Carbonsäureanhydrid und Diethylenglykol, wobei durch eine spezielle Reaktionsführung die Bildung von 1,4-Dioxan aus Diethylenglykol weitgehend unterdrückt wird, zur Herstellung von Metallverbundelementen, sowie die Metallverbundelemente selbst.

Polyesterpolyole sind wichtiger Bestandteil vieler geschäumter und nicht geschäumter Polyurethansysteme. Polyesterpolyole, wie sie zur Bildung von Polyurethanen Verwendung finden, weisen ganz überwiegend Hydroxylendgruppen auf, die einer weiteren Reaktion mit Isocyanatgruppen zugänglich sind. Die Molmasse der Polyesterpolyole liegt typischerweise im Bereich von 200 - 5000 Dalton. Ihre Herstellung erfolgt hauptsächlich durch Polykondensation von Polycarbonsäuren, insbesondere Dicarbonsäuren, und Polyolen, insbesondere Diolen, dadurch dass unter entwässernden Bedingungen Carboxyl- und Hydroxylgruppen unter Bildung von Estergruppen zur Reaktion gebracht werden. Alternativ können auch Anhydride von Polycarbonsäuren, beispielsweise Phthalsäureanhydrid, verwendet werden.

Entwässernde Bedingungen können beispielsweise durch das Anlegen von Vakuum, dem Ausblasen des Reaktionswassers mittels eines Inertgasstromes oder dem azeotropen Auskreisen mittels eines Schleppmittels erreicht werden (Houben-Weyl, Methoden der organischen Chemie, Band 14/2, Makromolekulare Stoffe, Thieme Verlag Stuttgart, Hrsg. E. Müller, S. 1- 47, 1963).

Dem Fachmann ist bekannt, dass bei der Veresterung der aromatischen Phthalsäure, meist eingesetzt in Form von Phthalsäureanhydrid, mit Diethylenglykol unerwünschterweise 1,4-Dioxan als Nebenprodukt entsteht. Das entstandene Dioxan wird bei der Produktion in technischen Anlagen zusammen mit dem Reaktionswasser ausgetragen und muss danach beispielsweise in Kläranlagen abgebaut werden oder nach Aufkonzentrierung verbrannt werden. Durch diesen zusätzlichen Verfahrensschritt erhöhen sich die Kosten der Polyesterpolyol-Produktion.

Das als Nebenprodukt entstehende 1,4-Dioxan führt auch dazu, dass die Ausbeute an gewünschtem Produkt vermindert wird, da ein Teil des eingesetzten Diethylenglykols nicht in den dargestellten Polyester eingebaut wird, sondern wie beschrieben in Form von 1,4-Dioxan an dem Reaktionsgemisch entfernt wird. Daher ergibt sich aus der Bildung von 1,4-Dioxan ein gravierender wirtschaftlicher Nachteil.

Weiterhin kann die Menge an 1,4-Dioxan, die von einer Produktionsanlage hergestellt werden darf, durch Konzessionsvorgaben begrenzt sein. Die Begrenzung der Menge an Dioxan führt damit in diesen Fällen indirekt zur Begrenzung der Produktionskapazität einer Anlage zur Herstellung von Polyesterpolyolen.

JP 2003128767 A beschreibt ein Verfahren zur Herstellung von Polyesterpolyolen, wobei Phthalsäureanhydrid, Diethylenglykol, Adipinsäure und Ethylenglykol verestert werden, wobei das Molverhältnis von Phthalsäureanhydrid und Diethylenglykol bei nahezu 3 und der Gewichtsanteil dieser Mischung bei weniger als 30 Gew.-% liegt.

WO 2004/050735 A1 beschreibt ein Verfahren zur Herstellung von Polyesterpolyolen, wobei Phthalsäureanhydrid, Sebacinsäure oder Dodecandisäure und Diethylenglykol, Adipinsäure und Ethylenglykol verestert werden. Hierbei beträgt das Molverhältnis von Diethylenglykol zu Phthalsäureanhydrid größer als 1,6 zu 1.

Die Verwendung von PUR- oder PIR-Schaumstoffen, erhältlich aus Polyesterpolyolen aus wenigstens einem Carbonsäureanhydrid und Diethylenglykol, die ihrerseits durch das nachstehend näher beschriebenes Verfahren erhältlich sind, bei dem die Menge an entstehendem Dioxan in Bezug auf die Menge an eingesetztem Diethylenglykol begrenzt wird, zur Herstellung von Metallverbundelementen, wird im Stand der Technik nicht offenbart und nicht durch diesen nahegelegt. Dabei lässt sich die Menge an Dioxan auf unter 8 g pro kg, bevorzugt auf unter 6 g pro kg, eingesetztem Diethylenglykol begrenzen.

Ferner lässt sich die Menge an entstehendem Dioxan in Bezug auf die Menge des gebildeten Polyesterpolyols reduzieren. Dabei lässt sich die Menge an Dioxan auf unter 4 g pro kg, bevorzugt auf unter 3 g pro kg gebildetem Polyesterpolyol begrenzen.

Ein Gegenstand der Erfindung sind Metallverbundelemente, umfassend einen PUR- oder PIR-Schaumstoff, erhältlich nach einem Verfahren umfassend die Schritte:
a) Umsatz eines Polyesterpolyols erhältlich nach dem nachstehend beschriebenen Verfahren mit
b) einer polyisocyanathaltigen Komponente,
c) einem Treibmittel,
d) einem oder mehreren Katalysatoren,
e) gegebenenfalls Flammschutzmitteln und/oder weiteren Hilfs- und Zusatzstoffen.

In Schritt a) wird dabei ein Polvesterpolyol, erhältlich nach einem Verfahren, worin wenigstens ein Carbonsäureanhydrid (A), Diethylenglykol (B) und
i) wenigstens ein C₂-C₄ Glykol (C) und wenigstens eine aliphatische C₅ - C₁₂ Dicarbonsäure (D) oder
ii) wenigstens ein C₅ - C₁₀ Glykol (E) und wenigstens einer C₄ Dicarbonsäure (F) vermischt werden,
wobei das Molverhältnis der Komponenten (B) zu (A) im Bereich von 1,5 zu 1 bis 1,1 zu 1 liegt und der Gewichtsanteil der Komponenten (A) und (B) bezogen auf das Gewicht aller Komponenten der Mischung im Bereich zwischen 66 bis 95 Gew.- % liegt, eingesetzt.

Die Mengen der Komponenten (C), (D), (E) und (F) werden so gewählt, dass sich die Mengen aller Komponenten (A), (B), (C) und (D) bzw. (E) und (F) in der Mischung zu 100 Gew.-% ergänzen.

In einer bevorzugten Ausführungsform ist das Carbonsäureanhydrid (A) aromatisch.

Vorzugsweise wird das Carbonsäureanhydrid (A) ausgewählt aus der Gruppe bestehend aus Phthalsäureanhydrid, Trimellitsäureanhydrid und Pyromellitsäureanhydrid. Besonders bevorzugt ist das Carbonsäureanhydrid Phthalsäureanhydrid.

Durch den Austausch kleiner Mengen aromatischer Dicarbonsäuren gegen eine äquivalente Menge einer aliphatischen Dicarbonsäure (D oder F) und den Austausch kleiner Mengen Diethylenglykol gegen äquivalente Mengen der Glykole (C) oder (E) verringert sich die Menge an Dioxanabfall bei der Herstellung der Polyesterpolyole weit über das durch den Verdünnungseffekt zu erwartendem Maß hinaus. Dabei bleiben die Eigenschaften des hergestellten Polyesterpolyols nahezu gleich, das heißt Polyesterpolyole die nach dem erfindungsgemäßem Verfahren hergestellt werden weisen die gleichen Eigenschaften auf wie entsprechende Polyesterpolyole, die ohne Zusatz von aliphatischen Dicarbonsäuren ((D) oder (F)) und ohne Zusatz der Glykole (C) oder (E) hergestellt wurden.

Vorzugsweise wird das C₂-C₄ Glykol (C) ausgewählt aus der Gruppe bestehend aus Ethyl-englykol, 1,3-Propandiol, 2-Methyl-1,3-propandiol und 1,2--Propandiol. Besonders bevorzugt ist das C₂-C₄ Glykol (C) Ethylenglykol.

Vorzugsweise wird die aliphatische C₅-C₁₂ Dicarbonsäure (D) ausgewählt aus der Gruppe bestehend aus Glutarsäure, Adipinsäure, Pimelinsäure, Korksäure, Azelainsäure, Sebacinsäure, Undecandisäure und Dodecandisäure. Besonders bevorzugt als C₅-C₁₂ Dicarbonsäure (D) Adipinsäure oder Sebacinsäure.

Vorzugsweise wird das C₅-C₁₀ Glykol (E) ausgewählt aus der Gruppe bestehend aus 1,5-Pentandiol, 3-Methyl-1,5-pentandiol, 1,6-Hexandiol und 1,8-Octandiol. Besonders bevorzugt ist das C₅-C₁₀ Glykol (E) 3-Methyl-1,5-pentandiol oder 1,6-Hexandiol.

Vorzugsweise ist die C₄ Dicarbonsäure (F) ausgewählt aus der Gruppe bestehend aus Bernsteinsäure, Fumarsäure und Maleinsäure. Besonders bevorzugt ist die C₄ Dicarbonsäure (F) Bernsteinsäure.

Vorzugsweise liegt die Molmasse des erhaltenen Polyesterpolyols im Bereich zwischen 750 und 350, besonders bevorzugt im Bereich zwischen 620 und 370.#

Vorzugsweise liegt die OH-Zahl des erhaltenen Polyesterpolyols im Bereich zwischen 150 und 320 g KOH/kg, bevorzugt im Bereich zwischen 180 - 300 KOH/kg.

Ein weiterer Gegenstand der vorliegenden Erfindung ist die Verwendung eines PUR- bzw. PIR-Schaumstoffes, der nach dem vorstehend beschriebenen Verfahren umfassend die Schritte a) bis e) erhalten wurde, zur Herstellung von Metallverbundelementen.

Metallverbundelemente sind Sandwich-Verbundelemente, bestehend aus wenigstens zwei Deckschichten und einer dazwischen liegenden Kernschicht. Im Besonderen bestehen Metall-Schaumstoff-Verbundelemente wenigstens aus zwei Deckschichten aus Metall und einer Kernschicht aus einem Schaumstoff, z.B. einem Polyurethan (PUR)-Hartschaumstoff, bzw. aus einem Polyurethan-Polyisocyanurat (PUR-PIR)-Hartschaumstoff. Derartige Metall-Schaumstoff-Verbundelemente sind aus dem Stand der Technik hinlänglich bekannt und werden auch als Metallverbundelemente bezeichnet. Zwischen der Kernschicht und den Deckschichten können weitere Schichten vorgesehen sein. Beispielsweise können die Deckschichten. z.B. mit einem Lack, beschichtet werden.

Beispiele für die Anwendung derartiger Metallverbundelemente sind ebene oder linierte Wandelemente sowie profilierte Dachelemente für den Industriehallen- und Kühlhausbau ebenso wie für LKW-Aufbauten, Hallentüren oder Transportcontainer.

Die Herstellung dieser Metallverbundelemente kann kontinuierlich oder diskontinuierlich erfolgen. Vorrichtungen zur kontinuierlichen Herstellung sind z.B. aus DE 1 609 668 A oder DE 1 247 612 A bekannt.

Die OH-Zahl wird bestimmt, indem in einer Probe des Polyesterpolyols die Hydroxylendgruppen zunächst mit einem definierten Überschuss eines Anhydrids, z.B. Essigsäureanhydrid zur Umsetzung gebracht werden, das überschüssige Anhydrid hydrolysiert und der Gehalt an freien Carboxylgruppen durch direkte Titration mit einer starken Base, z.B. Natriumhydroxid, ermittelt wird. Die Differenz von in Form des Anhydrids eingebrachten Carboxylgruppen und den experimentell gefundenen Carboxylgruppen ist ein Maß für die Anzahl an Hydroxylgruppen der Probe. Sofern dieser Wert um die Anzahl der in der ursprünglichen Probe infolge nicht ganz vollständiger Veresterung enthaltenen Carboxylgruppen korrigiert wird, d.h. um die Säurezahl, wird die OH-Zahl erhalten. Die meist mit Natriumhydroxid durchgeführten Titrationen werden dabei in die äquivalente Menge Kaliumhydroxid umgerechnet, so dass Säure- und Hydroxylzahlen die Dimension g KOH/kg aufweisen. Zwischen Hydroxylzahl (OH#) und zahlenmittlerem Molekulargewicht (M) besteht dabei folgender rechnerischer Zusammenhang: M = (56100 * F) / OH#. F bedeutet hierbei die zahlenmittlere Funktionalität und kann aus der Rezeptur in guter Nährung abgeleitet werden.

Vorzugsweise liegt die Viskosität des erhaltenen Polyesterpolyols bei einer Temperatur von 50°C im Bereich zwischen 400 und 3000 mPas, bevorzugt im Bereich zwischen 450 und 1500 mPas.

Die Viskosität wird mit Hilfe eines Kegel-Platte-Viskosimeters, z.B. Physica MCR 51 der Fa. Anton Paar, bestimmt, wobei auf Scherrate Null extrapoliert wird. Erfindungsgemäße Polyole sind weitestgehend nicht strukturviskos.

Vorzugsweise liegt der Gewichtsanteil der Komponenten (A) und (B) bezogen auf das Gewicht aller Komponenten im Bereich zwischen 70 und 85 Gew.-%.

Bevorzugt weisen die erhaltenen Polyesterpolyole eine Säurezahl von 0,5 bis 3,5 g KOH/kg auf.

Die Funktionalität der erhaltenen Polyesterpolyole liegt vorzugsweise im Bereich von 1,9 bis 3. Funktionalitäten größer 2 werden dadurch erhalten, dass Bausteine mit Funktionalitäten größer 2 beispielsweise Triole oder Tetraole und/oder Tri- oder Tetracarbonsäuren und/oder trifunktionelle Hydroxycarbonsäuren bei der Veresterung anteilig mit verwendet werden. Typische Vertreter sind Glycerin, 1,1,1,-Trimethylolpropan, Pentaerythrit, Trimellitsäure, Trimesinsäure, Äpfelsäure, Weinsäure, Zitronensäure, Dimethylolpropionsäure, etc. Bevorzugt lässt sich eine Funktionalität im Bereich von 2,0 bis 2,3 durch Verwendung von Glycerin oder 1,1,1-Trimethylolpropan einstellen. Dabei weicht die bei 25°C gemessene Viskosität um weniger als 20% von dem Wert für die Viskosität ab, der für ein Funktionalitäts- und Hydroxylzahl-gleiches Polyesterpolyol gemessen wird, das neben der funktionalitätserhöhenden Komponente (beispielsweise 1,1,1-Trimethylolpropan) ausschließlich aus Phthalsäureanhydrid und Diethylenglykol aufgebaut ist.

Vorzugsweise wird ein Vakuumverfahren zur Herstellung der erfindungsgemäßen Polyesterpolyole bei Drücken im Bereich von Normaldruck bis 5 mbar Endvakuum, bevorzugt bis 10 mbar Endvakuum, und Temperaturen im Bereich von 100 - 230, bevorzugt 180 bis 215 °C durchgeführt.

Vorzugsweise wird das Verfahren zur Herstellung der in Schritt a) einzusetzenden Polyesterpolyole durchgeführt, indem alle Komponenten gleichzeitig vorgelegt werden und zunächst unter Normaldruck unter Verwendung eines Schutzgases bei Temperaturen im Bereich von 100 bis 230 °C, besonders bevorzugt bei Temperaturen im Bereich von 180 bis 215 °C, solange kondensiert wird bis kein Reaktionswasser mehr abdestilliert und anschließend, gegebenenfalls nach Zusatz eines Veresterungskatalysators, der Druck im Verlauf von 1 bis 4 Stunden auf unterhalb von 20 mbar vermindert wird und schließlich bei Temperaturen im Bereich von 180 bis 215 °C und vollem Wasserstrahlvakuum polykondensiert wird, bis eine Säurezahl von unter 5 g KOH/kg erhalten wird.

Zur Herstellung der in Schritt a) einzusetzenden Polyesterpolyole können alle dem Fachmann bekannten Katalysatoren verwendet werden. Bevorzugt werden Zinn-(II)-chlorid und Titan-tetraalkoxylate verwendet.

Die Umsetzung der Komponenten zur Herstellung des in Schritt a) einzusetzenden Polyesterpolyols erfolgt vorzugsweise in Substanz.

Alternativ können die Polyesterpolyole auch durch das Stickstoffblasverfahren hergestellt werden, bei dem das Kondensat durch einen Stickstoffstrom aus dem Reaktionsgefäß ausgetragen wird (J.H. Saunders und H.T. Frisch in Polyurethanes: Chemistry and Technology, Part I. Chemistry, Interscience published John Wiley and Sons, New York 1962, Seite 45).

Eine polyisocyanathaltige Komponente b) umfasst Polyisocyanate.

Bei den verwendeten Polyisocyanaten handelt es sich um auf dem Polyurethangebiet üblichen Isocyanate. In Betracht kommen im Allgemeinen aliphatische, cycloaliphatische, arylaliphatische und aromatische mehrwertige Isocyanate. Bevorzugt werden aromatische Di- und Polyisocyanate verwendet. Bevorzugte Beispiele sind 2,4- und 2,6-Toluylendiisocyanat, sowie beliebige Gemische dieser Isomeren, 2,2'-, 2,4'- und 4,4'-Diphenylmethandiisocyanat sowie beliebige Gemische dieser Isomeren, Mischungen aus 2,2'-, 2,4'-, 4,4'-Diphenylmethan-diisocyanaten (Zweikern-MDI) und Polyphenylen-polymethylenpolyisocyanaten (MDI). Alternativ können auch Gemische aus Toluylendiisocyanaten und MDI eingesetzt werden.

Als Treibmittel c) können allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind (cyclo)aliphatische Kohlenwasserstoffe mit 4 bis 8 Kohlenstoffatomen, sowie HFKW und HFCKW, die unter den Bedingungen der Polyurethanbildung verdampfen. In einer bevorzugten Ausführungsform werden Pentan und Cyclopentan, sowie Gemische aus Pentan und Cyclopentan als Treibmittel verwendet.

Die Menge der eingesetzten Treibmittel richtet sich überwiegend nach der angestrebten Dichte der Schaumstoffe. Im Allgemeinen wird Wasser von 0 bis 5 Gew.% bezogen auf die Gesamtrezeptur, bevorzugt von 0,1 bis 3 Gew.%, verwendet. Im Allgemeinen kann ferner physikalisch wirkendes Treibmittel von 0 bis 8 Gew.%, bevorzugt von 0,1 bis 5 Gew.%, verwendet werden. Als Treibmittel kann auch Kohlendioxid eingesetzt werden, das vorzugsweise als Gas in den Ausgangskomponenten gelöst wird.

Als Katalysatoren d) für die Herstellung der erfindungsgemäßen Polyurethan- bzw. Polyisocyanurat-Schaumstoffe werden die üblichen und bekannten Polyurethan- bzw. Polyisocyanuratbildungskatalysatoren eingesetzt, beispielsweise organische Zinnverbindungen, wie Zinndiacetat, Zinndioctoat, Dibutylzinndilaurat und/oder stark basische Amine wie 2,2,2-Diazabicyclooctan, Triethylamin oder vorzugsweise Triethylendiamin oder Bis(N,N-Dimethylaminoethyl)ether, sowie zur Katalyse der PIR-Reaktion Kaliumacetat und aliphatische quaternäre Ammoniumsalze.

Die Katalysatoren werden vorzugsweise in einer Menge von 0,1 bis 3 Gew.%, vorzugsweise 0,5 bis 2 Gew.%, bezogen auf das Gesamtgewicht aller Komponenten eingesetzt.

Die Umsetzung der vorstehend genannten Komponenten erfolgt gegebenenfalls in Anwesenheit von Hilfs- und/oder Zusatzstoffen, wie beispielsweise Zellreglern, Trennmitteln, Pigmenten, Verstärkungsstoffen wie Glasfasern, oberflächenaktiven Verbindungen und/oder Stabilisatoren gegen oxidativen, thermischen, hydrolytischen, mikrobiellen Abbau oder Alterung. Die Polyurethanschaumstoffe weisen üblicherweise eine Dichte von 20 bis 250 g/l, vorteilhafterweise von 25 bis 150 g/l, besonders bevorzugt von 30 bis 100 g/l, ganz besonders bevorzugt von 35 bis 75 g/l auf.

Zur Herstellung eines erfindungsgemäß einzusetzenden Polyurethanschaumstoffes werden im Allgemeinen alle Komponenten über übliche Hoch- oder Niederdruckmischköpfe vermischt in solchen Mengen so zur Umsetzung gebracht, dass das Äquivalentverhältnis von NCO-Gruppen zur Summe der reaktiven Wasserstoffatome im Falle reiner PUR-Schäume im Bereich zwischen 1 zu 0,8 bis 1 zu 1,60, vorzugsweise im Bereich zwischen 1 zu 0,9 bis 1,15 liegt. Einem Verhältnis von 1 zu 1 entspricht hierbei einem NCO-Index von 100.

Im Falle von PUR-PIR-Schäumen liegt das Äquivalentverhältnis von NCO-Gruppen zur Summe der reaktiven Wasserstoffatome im Bereicht zwischen 1 zu 1,60 bis 1 zu 5,0 vorzugsweise zwischen 1 zu 2,0 bis 1 zu 4,0.

Die durch das oben beschriebene Verfahren erhältlichen Polyesterpolyol können zur Herstellung von Polyurethan verwendet werden. Polyurethan ist ein vielseitiger Werkstoff, der in vielen Bereichen Anwendung findet. Auf Grund der großen Vielfalt der verwendbaren Rohstoffe können Produkte mit den unterschiedlichsten Eigenschaften hergestellt werden, beispielsweise Hartschäume zur Dämmung, Blockweichschäume für Matratzen, Formweichschäume für Autositze und Sitzkissen, Akustikschäume zur Schalldämmung, thermoplastische Schäume, Schuhschäume oder mikrozelluläre Schäume, aber auch kompakte Giessysteme und thermoplastische Polyurethane.

### Beispiele:

### Zusammenstellung der in den Beispielen verwendeten Rohstoffe

| | |
|---|---|
| Phthalsäureanhydrid (PSA): | Technisches PSA der Fa. Lanxess |
| Adipinsäure: | Adipinsäure der Fa. BASF |
| Diethylenglykol (DEG): | DEG der Fa. Ineos |
| Ethylenglykol (EG): | EG der Fa. Ineos |
| Zinn-II-Chlorid-dihydrat | der Fa. Aldrich |
| Verwendete Analysenmethoden: | |
| Viskosimeter: | MCR 51 der Fa. Anton Paar |

### A) Herstellung der Polyesterpolyole

### Beispiel 1(V) (Standardverfahren, Vergleich):

In einem 4-Liter 4-Halskolben, ausgestattet mit Heizpilz, mechanischem Rührwerk, Innenthermometer, 40 cm-Füllkörper-Kolonne, Kolonnenkopf, absteigendem Intensivkühler und Trockeneis gekühlter Vorlage, sowie Membranvakuumpumpe wurden unter Stickstoffüberschleierung bei 140°C 1437 g (9,71 Mol) PSA vorgelegt und 1737,3 g (16,39 Mol) DEG langsam zugegeben. Nach 1 Stunde wurde die Temperatur auf 190°C erhöht, 65 mg Zinn-II-Chlorid-dihydrat eingerührt, der Druck auf 700 mbar verringert und die Reaktionstemperatur auf 215°C erhöht. Im Verlauf weiterer 5 Stunden verringerte man kontinuierlich den Druck auf zuletzt 160 mbar und vervollständigte die Reaktion bis zu einer Gesamtlaufzeit von 26 Std. Während der gesamten Umsetzung wurden Destillate in einer mit Trockeneis gekühlten Vorlage gesammelt. Man bestimmte die Menge an entstandenem 1,4-Dioxan gaschromatographisch zu 34,3 g

Analyse des Polyesters:
Hydroxylzahl: 238,2 mg KOH/g
Säurezahl: 1,7 mg KOH/g
Viskosität: 10400 mPas (25°C), 890 mPas (50°C), 180 mPas (75°C)
Menge gebildeten Polyester Polyols: 2965 g
Menge an Dioxan bezogen auf Menge Polyester Polyol: 34,3 g / 2,965 kg = 11,6 g Dioxan/kg Polyester
Menge an Dioxan bezogen auf Menge eingesetzten DEGs: 34,3 g / 1,738 kg = 19,7 g Dioxan/kg DEG

### Beispiel 2(V) (Standardverfahren, geringere Temperatur, Vergleich):

In einer Apparatur nach Beispiel 1 wurden unter Stickstoffüberschleierung bei 140°C 1437 g (9,71 Mol) PSA vorgelegt und 1737,3 g (16,39 Mol) DEG langsam zugegeben. Nach 1 Stunde wurde die Temperatur auf 180°C erhöht, 65 mg Zinn-II-Chlorid-dihydrat eingerührt, der Druck auf 700 mbar verringert. Im Verlauf weiterer 5 Stunden verringerte man kontinuierlich den Druck auf zuletzt 45 mbar. Man erhöhte die Temperatur auf 200°C und den Druck auf 115 mbar und vervollständigte die Reaktion bis zu einer Gesamtlaufzeit von 27 Std. Während der gesamten Umsetzung wurden Destillate in einer mit Trockeneis gekühlten Vorlage gesammelt. Man bestimmte die Menge an entstandenem 1,4-Dioxan gaschromatographisch zu 17,6 g

Analyse des Polyesters:
Hydroxylzahl: 234,5 mg KOH/g
Säurezahl: 1,6 mg KOH/g
Viskosität: 11300 mPas (25°C), 930 mPas (50°C), 190 mPas (75°C)
Menge gebildeten Polyester Polyols: 2982 g
Menge an Dioxan bezogen auf Menge Polyester Polyol: 17,6 g / 2,982 kg = 5,9 g Dioxan/kg Polyester
Menge an Dioxan bezogen auf Menge eingesetzten DEGs: 17,6 g / 1,738 kg = 10,2 g Dioxan/kg DEG

### Beispiel 3 (Standardverfahren, erfindungsgemäß):

In einer Apparatur nach Beispiel 1 wurden unter Stickstoffüberschleierung bei Raumtemperatur 1444 g (9,76 Mol) PSA, 1386 g (13,08 Mol) DEG, 356 g (2,44 Mol) Adipinsäure und 429 g (6,92 Mol) EG eingewogen und für 1 Stunde bei 140°C gerührt. Danach wurde die Temperatur für 3 Std. auf 200°C erhöht. Danach wurden 65 mg Zinn-II-Chlorid-dihydrat eingerührt, der Druck auf 400 mbar verringert. Im Verlauf weiterer 5 Stunden verringerte man kontinuierlich den Druck auf zuletzt 60 mbar. Man vervollständigte die Reaktion bis zu einer Gesamtlaufzeit von 32 Std. bei 110 mbar. Während der gesamten Umsetzung wurden Destillate in einer mit Trockeneis gekühlten Vorlage gesammelt. Man bestimmte die Menge an entstandenem 1,4-Dioxan gaschromatographisch zu 6,9 g

Analyse des Polyesters:
Hydroxylzahl: 242 mg KOH/g
Säurezahl: 0,3 mg KOH/g
Viskosität: 7310 mPas (25°C), 740 mPas (50°C), 170 mPas (75°C)
Menge gebildeten Polyester Polyols: 3353 g
Menge an Dioxan bezogen auf Menge Polyester Polyol: 6,9 g / 3,353 kg = 2,1 g Dioxan/kg Polyester
Menge an Dioxan bezogen auf Menge eingesetzten DEGs: 6,9 g / 1,386 kg = 5,0 g Dioxan/kg DEG

**Tabelle 1: Beispiele 1(V) bis 3 zur Herstellung von Polyesterpolyolen. Als Katalysator wurden jeweils 20 ppm Zinn-II-chlorid-dihydrat verwendet.**

| Bspl. | | 1 (V) | 2 (V) | 3 |
|---|---|---|---|---|
| Phthalsäureanhydrid | [mol] | 9,71 | 9,71 | 9,76 |
| | [g] | 1437,1 | 1437,1 | 1444,5 |
| Diethylenglykol | [mol] | 16,39 | 16,39 | 13,08 |
| | [g] | 1737,3 | 1737,3 | 1386,5 |
| Adipinsäure | [mol] | | | 2,44 |
| | [g] | | | 356,2 |
| Ethylenglykol | [mol] | | | 6,92 |
| | [g] | | | 429 |
| Verhältnis (DEG/PSA) | [mol/mol] | 1,69 | 1,69 | 1,34 |
| Anteil (DEG+PSA) | [Gew.-%] | 100 | 100 | 78,3 |
| Hydroxylzahl | [mg KOH/g] | 238 | 234 | 242 |
| Säurezahl | [mg KOH/g] | 1,7 | 1,6 | 0,3 |
| Max. Reaktionstemperatur | [°C] | 215 | 200 | 200 |
| Laufzeit | [Std] | 26 | 27 | 32 |
| Dioxan, gefunden | [g] | 34,3 | 17,6 | 6,9 |
| Masse Ester, theoret. | [g] | 3000 | 3000 | 3353 |
| Masse Ester, ohne Dioxan | [g] | 2965 | 2982 | 3346 |
| Dioxan/kg Ester | [g Dioxan/kg Ester] | 11,56 | 5,92 | 2,06 |
| Dioxan/kg DEG | [g Dioxan/kg DEG] | 19,73 | 10,16 | 4,96 |
| Viskosität (bei 50°C) | [mPas] | 900 | 930 | 740 |

Tabelle 1 zeigt anhand der Beispiele 1 (V) und 2(V), daß mit der Verringerung der Reaktionstemperatur von 215 auf 200°C bereits eine wesentliche Verbesserung hinsichtlich der entstandenen Dioxanmenge einhergeht: Die Dioxanmenge, die pro kg Ester entsteht, verringert sich von 11,56 g auf 5,92, bzw. pro kg an eingesetztem DEG von 19,73 auf 10,16 g. Wesentlich über diese Verbesserung hinaus geht jedoch das erfindungsgemäße Beispiel 3, bei dem der bloße Verdünnungseffekt - 78,3% dieses Ester bestehen aus DEG und PSA - Werte von ca. 4,6 g Dioxan pro kg Ester, bzw. 7,92 g Dioxan pro kg eingesetztes DEG erwarten ließen, jedoch vorteilhafterweise nur 2,06, bzw. 4,96 gefunden werden

### Rohstoffe für Hartschäume:

a.) Polyester aus Bspl. 1(V), 2(V) und 3
   Schäumzusatzmittel, bestehend aus b.) -f.):
b.) TCPP, Tris(1-chloro-2-propyl)-phosphat der Fa. Lanxess
c.) TEP, Triethylphosphat der Fa. Levagard
d.) Additiv 1132 der Fa. Bayer MaterialScience
e.) PET V 657, trifunktionelles Polyetherpolyol mit einer Molmasse von ca. 660 Da. der Fa. Bayer MaterialScience AG
f.) Stabilisator, Polyetherpolysiloxancopolymerisat der Fa. Evonik
g.) Aktivator: Desmorapid VP.PU 30HB13 da Fa. BMS
h.) Desmodur VP.PU 44V70L, Polyisocyanat der Fa. Bayer MaterialScience

**Tabelle 2: Rezepturen für Hartschäume:**

| | | 4(V) | 5(V) | 6 |
|---|---|---|---|---|
| Polyesterpolyol aus Bspl. 1 (V) | [Tle.] | 63,8 | | |
| Polyesterpolyol aus Bspl. 2(V) | [Tle.] | | 63,8 | |
| Polyesterpolyol aus Bspl. 3 | [Tle.] | | | 63,8 |
| Schäumzusatzmittel | [Tle.] | 36,2 | 36,2 | 36,2 |
| Pentan | [Tle.] | 15,8 | 15,5 | 15,6 |
| Aktivator | [Tle.] | 6,0 | 4,7 | 4,7 |
| Desmodur 44V70L | [Tle.] | 165 | 159,0 | 160 |

| Eigenschaften der Hartschäume: | | | | |
|---|---|---|---|---|
| Brandklasse/Flammenhöhe | [mm] | Kl. 5/100-110 | Kl. 5/100-120 | Kl. 5/100-120 |
| Haftung | [N] | 30 | 30 | 40 |
| Störung | | wenig | wenig | wenig |
| Härte | | 5 | 5 | 8 |
| Kerntemperatur | [°C] | 161 | 160 | 155 |

Im Labormaßstab werden alle Rohstoffe der Hartschaumrezeptur mit Ausnahme der Polyisocyanatkomponente in einem Pappbecher eingewogen, auf 23°C temperiert, mittels eines Pendraulik-Labormischers (z.B. Type LM-34 der Fa. Pendraulik) vermischt und verflüchtigtes Treibmittel (Pentan) ggf. ergänzt. Anschließend wurde unter Rühren die Polyisocyanatkomponente (ebenfalls auf 23°C temperiert) zur Polyolmischung gegegeben, diese intensiv vermischt und das Reaktionsgemisch in Formen gegossen, die mit einer metallischen Deckschichten (Fa. Corus) ausgelegt sind. Nach 2,5 Minuten wurde die Schaumhärte mittels einer Eindruck-Methode und nach 8-10 Minuten die maximale Kerntemperatur bestimmt. Es wurde für mindestens weitere 24 Stunden bei 23°C nachreagieren gelassen und anschließend folgende Eigenschaften bestimmt:
- Brand:: BVD-Test entsprechend Schweizer Grundtest zur Ermittlung des Brennbarkeitsgrades von Baustoffen der Vereinigung kantonaler Feuerversicherungen in der Ausgabe von 1988, mit den Nachträgen von 1990, 1994,1995 und 2005. (zu beziehen bei Vereinigung kantonaler Feuerversicherungen, Bundesstr. 20, 3011 Bern, Schweiz).
- Haftung:: Wird bestimmt, indem die beschäumte Deckschicht abgeschält und die benötigte Kraft dafür mittels Federwaage ermittelt wurde
- Störung:: Visuelle Beurteilung auf Lunkerbildung. Es wurden "keine, wenig, mittel und starke" Lunkerbildung unterschieden

## Patentansprüche

1. Metallverbundelement umfassend einen PUR- oder PIR-Schaumstoff erhältlich nach einem Verfahren umfassend die Schritte:
a) Umsatz eines Polyesterpolyols erhältlich nach einem Verfahren wobei wenigstens ein Carbonsäureanhydrid (A), Diethylenglykol (B) und
i) wenigstens ein C2-C4 Glykol (C) und wenigstens eine aliphatische C5 - C12 Dicarbonsäure (D)
oder
ii) wenigstens ein C₅ - C₁₀ Glykol (E) und wenigstens eine C₄ Dicarbonsäure (F)
vermischt werden und wobei das Molverhältnis der Komponenten (B) zu (A) im Bereich von 1,5 zu 1 bis 1,1 zu 1 liegt und der Gewichtsanteil der Komponenten (A) und (B) bezogen auf das Gewicht aller Komponenten der Mischung im Bereich zwischen 66 bis 95 Gew.- % liegt, mit
b) einer polyisocyanathaltigen Komponente,
c) einem Treibmittel,
d) einem oder mehreren Katalysatoren,
e) gegebenenfalls Flammschutzmitteln und/oder weiteren Hilfs- und Zusatzstoffen.

2. Metallverbundelement nach Anspruch 1, **dadurch gekennzeichnet, dass** das Carbonsäureanhydrid (A) ausgewählt wird aus der Gruppe bestehend aus Phthalsäureanhydrid, Trimelittsäureanhydrid und Pyromellithsäureanhydrid, bevorzugt ist das Carbonsäureanhydrid Phthalsäureanhydrid.

3. Metallverbundelement nach Anspruch 1 oder 2, **dadurch gekennzeichnet, dass** das C₂ - C₄ Glykol (C) ausgewählt wird aus der Gruppe bestehend aus Ethylenglykol, 1,3-Propandiol, 2-Methyl-1,3-propandiol und 1,2-Propandiol, bevorzugt ist das C₂-C₄ Glykol (C) Ethylenglykol.

4. Metallverbundelement nach einem oder mehreren der Ansprüche 1 bis 3, **dadurch gekennzeichnet, dass** die aliphatische C₅ - C₁₂ Dicarbonsäure (D) ausgewählt wird aus der Gruppe bestehend aus Glutarsäure, Adipinsäure, Pimelinsäure, Korksäure, Azelainsäure, Sebacinsäure, Undecandisäure und Dodecandisäure, bevorzugt ist die C₅ - C₁₂ Dicarbonsäure Adipinsäure oder Sebacinsäure.

5. Metallverbundelement nach einem oder mehreren der Ansprüche 1 bis 4, **dadurch gekennzeichnet, dass** das C₅ - C₁₀ Glykol (E) ausgewählt wird aus der Gruppe bestehend aus 1,5- Pentandiol, 3-Methyl-1,5-pentandiol, 1,6-Hexandiol und 1,8-Octandiol, bevorzugt ist das C₅ - C₁₀ Glykol 3-Methyl-1,5-pentandiol oder 1,6-Hexandiol.

6. Metallverbundelement nach einem oder mehreren der Ansprüche 1 bis 5, **dadurch gekennzeichnet, dass** die C₄ Dicarbonsäure (F) ausgewählt wird aus der Gruppe bestehend aus Bernsteinsäure, Fumarsäure und Maleinsäure, bevorzugt ist die C₄ Dicarbonsäure (F) Bernsteinsäure.

7. Metallverbundelement nach einem oder mehreren der Ansprüche 1 bis 6, **dadurch gekennzeichnet, dass** das Molverhältnis der Komponenten (B) zu (A) im Bereich von 1,5 zu 1 bis 1,1 zu 1 liegt.

8. Metallverbundelement nach einem oder mehreren der Ansprüche 1 bis 7 **dadurch gekennzeichnet, dass** die Molmasse des erhaltenen Polyesterpolyols im Bereich zwischen 750 und 350, bevorzugt im Bereich zwischen 620 und 370, liegt.

9. Metallverbundelement nach einem oder mehreren der Ansprüche 1 bis 8, **dadurch gekennzeichnet, dass** die OH-Zahl des erhaltenen Polyesterpolyols im Bereich zwischen 150-320 g KOH/kg, bevorzugt im Bereich zwischen 180 - 300 g KOH/kg, liegt.

10. Metallverbundelement nach einem oder mehreren der Ansprüche 1 bis 9, **dadurch gekennzeichnet, dass** die Viskosität des erhaltenen Polyesterpolyols bei einer Temperatur von 50°C im Bereich zwischen 400 und 3000 mPas, bevorzugt im Bereich zwischen 450 und 1500 mPas, liegt.

11. Metallverbundelement nach einem oder mehreren der Ansprüche 1 bis 10, **dadurch gekennzeichnet, dass** der Gewichtsanteil der Komponenten (A) und (B) bezogen auf das Gewicht aller Komponenten in der Mischung im Bereich zwischen 66 und 95 Gew.-%, bevorzugt im Bereich zwischen 70 und 85 Gew.-%, liegt.

12. Verwendung eines PUR- oder PIR-Schaumstoffs zur Herstellung von Metallverbundelementen, wobei der PUR- oder PIR-Schaumstoff erhältlich ist nach einem Verfahren umfassend die Schritte:
a) Umsatz eines Polyesterpolyols erhältlich nach einem Verfahren wobei wenigstens ein Carbonsäureanhydrid (A), Diethylenglykol (B) und
i) wenigstens ein C2-C4 Glykol (C) und wenigstens eine aliphatische C5 - C12 Dicarbonsäure (D)
oder
ii) wenigstens ein C5 - C10 Glykol (E) und wenigstens eine C4 Dicarbonsäure (F)
vermischt werden und wobei das Molverhältnis der Komponenten (B) zu (A) im Bereich von 1,5 zu 1 bis 1,1 zu 1 liegt und der Gewichtsanteil der Komponenten (A) und (B) bezogen auf das Gewicht aller Komponenten der Mischung im Bereich zwischen 66 bis 95 Gew.- % liegt, mit
b) einer polyisocyanathaltigen Komponente,
c) einem Treibmittel,
d) einem oder mehreren Katalysatoren,
e) gegebenenfalls Flammschutzmitteln und/oder weiteren Hilfs- und Zusatzstoffen.

## Claims

1. Metal composite element comprising a PUR or PIR foam, obtainable by a process comprising the following steps:
a) reacting a polyester polyol, obtainable by a process where
at least one carboxylic acid anhydride (A), diethylene glycol (B) and
i) at least one C₂-C₄ glycol (C) and at least one aliphatic C₅-C₁₂ dicarboxylic acid (D),
or
ii) at least one C₅-C₁₀ glycol (E) and at least one C₄ dicarboxylic acid (F),
are mixed, and where the molar ratio of component (B) to (A) is in the range 1.5:1 - 1.1:1, and the proportion by weight of components (A) and (B), based on the weight of all the components of the mixture, is in the range 66 - 95 wt.%, with
b) a component containing polyisocyanate,
c) a blowing agent,
d) one or more catalysts, and
e) optionally flameproofing agents and/or other auxiliary substances and additives.

2. Metal composite element according to Claim 1, **characterized in that** the carboxylic acid anhydride (A) is selected from the group comprising phthalic anhydride, trimellitic anhydride and pyromellitic anhydride, and is preferably phthalic anhydride.

3. Metal composite element according to Claim 1 or 2, **characterized in that** the C₂-C₄ glycol (C) is selected from the group comprising ethylene glycol, 1,3-propanediol, 2-methyl-1,3-propanediol and 1,2-propanediol, and is preferably ethylene glycol.

4. Metal composite element according to one or more of Claims 1 to 3, **characterized in that** the aliphatic C₅-C₁₂ dicarboxylic acid (D) is selected from the group comprising glutaric acid, adipic acid, pimelic acid, suberic acid, azelaic acid, sebacic acid, undecanedioic acid and dodecanedioic acid, and is preferably adipic acid or sebacic acid.

5. Metal composite element according to one or more of Claims 1 to 4, **characterized in that** the C₅-C₁₀ glycol (E) is selected from the group comprising 1,5-pentanediol, 3-methyl-1,5-pentanediol, 1,6-hexanediol and 1,8-octanediol, and is preferably 3-methyl-1,5-pentanediol or 1,6-hexanediol.

6. Metal composite element according to one or more of Claims 1 to 5, **characterized in that** the C₄ dicarboxylic acid (F) is selected from the group comprising succinic acid, fumaric acid and maleic acid, and is preferably succinic acid.

7. Metal composite element according to one or more of Claims 1 to 6, **characterized in that** the molar ratio of component (B) to (A) is in the range 1.5:1 - 1.1:1.

8. Metal composite element according to one or more of Claims 1 to 7, **characterized in that** the molecular weight of the polyester polyol obtained is in the range 750 - 350, preferably in the range 620 - 370.

9. Metal composite element according to one or more of Claims 1 to 8, **characterized in that** the OH number of the polyester polyol obtained is in the range 150 - 320 g KOH/kg, preferably in the range 180 - 300 g KOH/kg.

10. Metal composite element according to one or more of Claims 1 to 9, **characterized in that** the viscosity of the polyester polyol obtained is in the range 400 - 3000 mPas, preferably in the range 450 - 1500 mPas, at a temperature of 50°C.

11. Metal composite element according to one or more of Claims 1 to 10, **characterized in that** the proportion by weight of components (A) and (B), based on the weight of all the components of the mixture, is in the range 66 - 95 wt.%, preferably in the range 70 - 85 wt.%.

12. Use of a PUR or PIR foam for the production of metal composite elements, where the PUR or PIR foam is obtainable by a process comprising the following steps:
a) reacting a polyester polyol, obtainable by a process where at least one carboxylic acid anhydride (A), diethylene glycol (B) and
i) at least one C₂-C₄ glycol (C) and at least one aliphatic C₅-C₁₂ dicarboxylic acid (D),
or
ii) at least one C₅-C₁₀ glycol (E) and at least one C₄ dicarboxylic acid (F),
are mixed, and where the molar ratio of component (B) to (A) is in the range 1.5:1 - 1.1:1, and the proportion by weight of components (A) and (B), based on the weight of all the components of the mixture, is in the range 66 - 95 wt.%, with
b) a component containing polyisocyanate,
c) a blowing agent,
d) one or more catalysts, and
e) optionally flameproofing agents and/or other auxiliary substances and additives.

## Revendications

1. Élément composite métallique comprenant une mousse de PUR ou de PIR pouvant être obtenue par un procédé comprenant les étapes suivantes :
a) la mise en réaction d'un polyester-polyol pouvant être obtenu par un procédé selon lequel au moins un anhydride d'acide carboxylique (A), du diéthylène glycol (B) et
i) au moins un glycol en C₂-C₄ (C) et au moins un acide dicarboxylique aliphatique en C₅-C₁₂ (D)
ou
ii) au moins un glycol en C₅-C₁₀ (E) et au moins un acide dicarboxylique en C₄ (F)
sont mélangés, le rapport molaire entre les composants (B) et (A) se situant dans la plage allant de 1,5 sur 1 à 1,1 sur 1 et la proportion en poids des composants (A) et (B) par rapport au poids de tous les composants du mélange se situant dans la plage allant de 66 à 95 % en poids, avec
b) un composant contenant du polyisocyanate,
c) un agent gonflant,
d) un ou plusieurs catalyseurs,
e) éventuellement des agents ignifuges et/ou des adjuvants et additifs supplémentaires.

2. Élément composite métallique selon la revendication 1, **caractérisé en ce que** l'anhydride d'acide carboxylique (A) est choisi dans le groupe constitué par l'anhydride de l'acide phtalique, l'anhydride de l'acide triméllitique et l'anhydride de l'acide pyroméllitique, l'anhydride d'acide carboxylique étant de préférence l'anhydride de l'acide phtalique.

3. Élément composite métallique selon la revendication 1 ou 2, **caractérisé en ce que** le glycol en C₂-C₄ (C) est choisi dans le groupe constitué par l'éthylène glycol, le 1,3-propanediol, le 2-méthyl-1,3-propanediol et le 1,2-propanediol, le glycol en C₂-C₄ (C) étant de préférence l'éthylène glycol.

4. Élément composite métallique selon une ou plusieurs des revendications 1 à 3, **caractérisé en ce que** l'acide dicarboxylique aliphatique en C₅-C₁₂ (D) est choisi dans le groupe constitué par l'acide glutarique, l'acide adipique, l'acide pimélique, l'acide subérique, l'acide azélaïque, l'acide sébacique, l'acide undécanedioïque et l'acide dodécanedioïque, l'acide dicarboxylique en C₅-C₁₂ étant de préférence l'acide adipique ou l'acide sébacique.

5. Élément composite métallique selon une ou plusieurs des revendications 1 à 4, **caractérisé en ce que** le glycol en C₅-C₁₀ (E) est choisi dans le groupe constitué par le 1,5-pentanediol, le 3-méthyl-1,5-pentanediol, le 1,6-hexanediol et le 1,8-octanediol, le glycol en C₅-C₁₀ étant de préférence le 3-méthyl-1,5-pentanediol ou le 1,6-hexanediol.

6. Élément composite métallique selon une ou plusieurs des revendications 1 à 5, **caractérisé en ce que** l'acide dicarboxylique en C₄ (F) est choisi dans le groupe constitué par l'acide succinique, l'acide fumarique et l'acide maléique, l'acide dicarboxylique en C₄ (F) étant de préférence l'acide succinique.

7. Élément composite métallique selon une ou plusieurs des revendications 1 à 6, **caractérisé en ce que** le rapport molaire entre les composants (B) et (A) se situe dans la plage allant de 1,5 sur 1 à 1,1 sur 1.

8. Élément composite métallique selon une ou plusieurs des revendications 1 à 7, **caractérisé en ce que** la masse molaire du polyester-polyol obtenu se situe dans la plage comprise entre 750 et 350, de préférence dans la plage comprise entre 620 et 370.

9. Élément composite métallique selon une ou plusieurs des revendications 1 à 8, **caractérisé en ce que** l'indice OH du polyester-polyol obtenu se situe dans la plage comprise entre 150 et 320 g KOH/kg, de préférence dans la plage comprise entre 180 et 300 g KOH/kg.

10. Élément composite métallique selon une ou plusieurs des revendications 1 à 9, **caractérisé en ce que** la viscosité du polyester-polyol obtenu à une température de 50 °C se situe dans la plage comprise entre 400 et 3 000 mPas, de préférence dans la plage comprise entre 450 et 1 500 mPas.

11. Élément composite métallique selon une ou plusieurs des revendications 1 à 10, **caractérisé en ce que** la proportion en poids des composants (A) et (B) par rapport au poids de tous les composants dans le mélange se situe dans la plage comprise entre 66 et 95 % en poids, de préférence dans la plage comprise entre 70 et 85 % en poids.

12. Utilisation d'une mousse de PUR ou de PIR pour la fabrication d'éléments composites métalliques, la mousse de PUR ou de PIR pouvant être obtenue par un procédé comprenant les étapes suivantes :
a) la mise en réaction d'un polyester-polyol pouvant être obtenu par un procédé selon lequel au moins un anhydride d'acide carboxylique (A), du diéthylène glycol (B) et
i) au moins un glycol en C₂-C₄ (C) et au moins un acide dicarboxylique aliphatique en C₅-C₁₂ (D)
ou
ii) au moins un glycol en C₅-C₁₀ (E) et au moins un acide dicarboxylique en C₄ (F)
sont mélangés, le rapport molaire entre les composants (B) et (A) se situant dans la plage allant de 1,5 sur 1 à 1,1 sur 1 et la proportion en poids des composants (A) et (B) par rapport au poids de tous les composants du mélange se situant dans la plage allant de 66 à 95 % en poids, avec
b) un composant contenant du polyisocyanate,
c) un agent gonflant,
d) un ou plusieurs catalyseurs,
e) éventuellement des agents ignifuges et/ou des adjuvants et additifs supplémentaires.
